# FASCICULE DE BREVET EUROPEEN

(11) **EP 2 107 846 B1**
(45) Date de publication et mention de la délivrance du brevet: **20.09.2017**
(21) Numéro de dépôt: 09153522.9
(22) Date de dépôt: 24.02.2009
(51) Int. Cl.: H04W 48/18, H04W 88/06

(54) **PROCÉDÉ D'ÉTABLISSEMENT D'UNE COMMUNICATION À PARTIR D'UN TERMINAL MOBILE EN MODE DUAL**
VERFAHREN ZUR VERBINDUNGSAUFBAU AUS EINEM MOBILEN ENDGERÄT IN DUALEN MODUS
METHOD FOR ESTABLISHING A COMMUNICATION FROM A MOBILE TERMINAL IN DUAL MODE

(30) Priorité: 02.04.2008 FR 0801812
(43) Date de publication de la demande: 07.10.2009
(73) Titulaire: ALCATEL LUCENT, 92100 Boulogne-Billancourt (FR)
(72) Inventeur: Gass, Raymond, 67150, BOLSENHEIM (FR); Rousseau, Jean-René, 92707, COLOMBES (FR)
(74) Mandataire: Berthier, Karine

(56) Documents cités:
- WO-A-00/41486
- WO-A-01/98867
- DE-A1- 10 341 737
- US-A1- 2006 068 786

## Description

L'invention a trait au domaine des télécommunications, et plus particulièrement des radiotélécommunications mettant en jeu des terminaux mobiles fonctionnant en mode dual, capables d'être reliés, via l'interface air, à des réseaux sans fil de types différents, par exemple un réseau de radiocommunication cellulaire (de deuxième génération tel que GSM/GPRS ou de troisième génération tel que UMTS), et un réseau local sans fil ou WLAN (Wireless Local Area Network) tel que WiFi, selon les prescriptions de la norme 802.11 de l'IEEE.

Les terminaux mobiles de type dual présentent l'avantage de permettre à l'utilisateur de choisir le type de réseau sur lequel il souhaite se connecter pour établir ses communications, par exemple pour s'adapter au type de réseau accessible (notamment lorsque l'un des réseaux est inaccessible) ou pour des raisons d'abonnement, le transit par un réseau WiFi pouvant en effet s'avérer plus économique que le transit par un réseau cellulaire, lequel nécessite un abonnement.

En pratique, l'avantage pour l'utilisateur d'avoir le choix entre deux types de réseaux peut toutefois s'avérer problématique, car lors de l'établissement d'une communication l'utilisateur doit systématiquement sélectionner le mode de fonctionnement de son terminal, ce qui à moyen et long terme peut devenir fastidieux.

Des solutions ont été proposées pour alléger les manipulations effectuées par l'utilisateur. Citons par exemple la demande de brevet français FR 2 866 184, qui propose d'opérer une sélection du réseau le mieux adapté à une communication en fonction des performances des réseaux fournies au terminal par les points d'accès, le terminal effectuant le choix sur la base de critères prédéterminés.

Une telle solution donne entière satisfaction pour certaines utilisations particulières, notamment lorsque les destinataires des appels passés depuis le terminal appartiennent tous à une même catégorie, couverte par un forfait unique souscrit par l'abonné, ou par son employeur dans le cadre d'une téléphonie d'entreprise.

Or il se trouve que de nombreux utilisateurs bénéficiant de la part de leur employeur d'un service de téléphonie d'entreprise se servent de leur terminal pour passer des appels privés. Si de nombreux employeurs ne voient pas par principe d'inconvénient à cette pratique, certains considèrent que l'utilisation par leurs employés des ressources réseau de l'entreprise à des fins privées ne doit pas être encouragée. Des politiques de contrôle et/ou de filtrage des appels peuvent être mises en place mais, outre qu'elles sont mal perçues par les employés, elles nécessitent de puissants (et par conséquent coûteux) moyens d'analyse et/ou de filtrage.

Aucune des solutions connues ne permet de remédier à ce problème : que la sélection du type de réseau soit opérée par l'utilisateur lui-même à partir de son terminal, ou automatiquement par celui-ci conformément au mode de fonctionnement décrit dans la demande de brevet précitée, elle peut s'avérer inopérante lorsque l'employeur a mis en place des filtres pour certains numéros d'appel, de sorte que le mode dual perd de son attrait.

Le document WO 01/98867 décrit un procédé d'établissement d'une communication à destination d'un terminal distant à partir d'un second terminal, ce procédé comprenant les opérations suivantes :
- Prise en compte par le second terminal d'un contact correspondant au terminal distant et comprenant une chaîne de caractères comprenant un champ d'identification contenant un identifiant du terminal distant, et un champ de description contenant au moins un caractère correspondant à une catégorie prédéterminée à laquelle appartient l'identifiant contenu dans le champ d'identification ;
- Analyse par le second terminal de la chaîne de caractères ;
- Prise en compte par le second terminal de la valeur du champ de description ;
- Détermination d'une règle de mise en communication correspondant à ladite valeur, cette règle comprenant la sélection d'un réseau de communication parmi plusieurs réseaux distincts auxquels le second terminal peut accéder.

L'invention vise à proposer une solution permettant, à partir d'un terminal fonctionnant en mode dual, de sélectionner un réseau en fonction de règles prédéterminées simples pouvant être paramétrées au niveau du terminal lui-même, et susceptibles de garantir une utilisation raisonnée des ressources réseaux.

A cet effet, l'invention propose, suivant un premier aspect, un procédé d'établissement d'une communication à destination d'un terminal distant à partir d'un terminal mobile fonctionnant en mode dual, ce procédé comprenant les opérations suivantes :
- Prise en compte par le terminal d'un contact correspondant au terminal distant et comprenant chaîne de caractères comprenant un champ d'identification contenant un identifiant du terminal distant, et un champ de description contenant au moins un caractère correspondant à une catégorie prédéterminée à laquelle appartient l'identifiant contenu dans le champ d'identification ;
- Analyse par le terminal de la chaîne de caractères ;
- Prise en compte par le terminal de la valeur du champ de description ;
- Détermination d'une règle de mise en communication correspondant à ladite valeur, cette règle comprenant la sélection d'un réseau de communication parmi plusieurs réseaux distincts auxquels le terminal peut accéder ;
- Prise en compte de la valeur du champ d'identification ;

Envoi, à destination du terminal distant, via le réseau sélectionné, d'une requête de mise en communication conformément à ladite règle ; et étant caractérisé en ce que pour une première valeur prédéterminée du champ d'identification (correspondant par exemple à un contact de type privé), la règle de mise en communication comprend l'envoi de la requête via un réseau de radiocommunication

Pour une deuxième valeur prédéterminée du champ d'identification (correspondant par exemple à un contact de type professionnel), la règle de mise en communication comprend par exemple l'envoi de la requête en priorité via un réseau local sans fil ou, lorsque ce réseau est inaccessible, via un réseau de radiocommunication cellulaire.

L'invention propose, suivant un deuxième aspect, un produit programme d'ordinateur implémenté sur une unité de traitement d'un système informatique, ledit programme comprenant des instructions pour la mise en oeuvre du procédé décrit ci-dessus.

Suivant un troisième objet, l'invention propose en outre un terminal mobile fonctionnant en mode dual, comprenant une unité de traitement sur laquelle est implémenté un tel produit programme d'ordinateur.

D'autres objets et avantages de l'invention apparaîtront à la lumière de la description faite ci-après en référence aux dessins annexés dans lesquels :
- la figure 1 est une vue schématique illustrant l'architecture d'un terminal fonctionnant en mode dual ;
- la figure 2 est un schéma synoptique illustrant un procédé d'établissement d'une communication selon un mode de réalisation de l'invention.

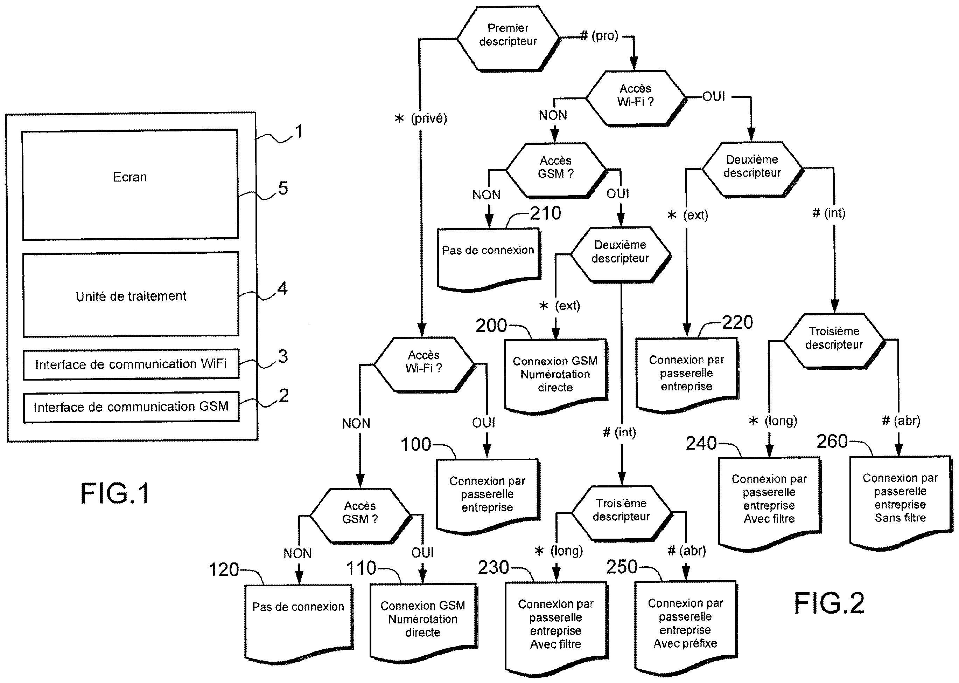

Sur la figure 1 est représenté un terminal 1 de communication mobile configuré pour fonctionner en mode dual, c'est-à-dire pour pouvoir se connecter à deux réseaux sans fil distincts et comprenant à cet effet deux interfaces de communication distinctes. En l'occurrence, le terminal 1 est configuré pour se connecter à un réseau de radiocommunication cellulaire GSM et à un réseau local sans fil WiFi, et comprend en conséquence, respectivement, une interface 2 de communication GSM et une interface 3 de communication WiFi. Ces interfaces sont contrôlées par une unité de traitement 4, laquelle commande également des éléments d'interface homme/machine du terminal 1, parmi lesquels un écran 5 (représenté sur la figure), un clavier, un micro et un écouteur (non représentés).

L'architecture interne du terminal 1 ne fait pas l'objet de l'invention et ne sera par conséquent pas décrite plus avant. Pour plus de détails sur les composants d'un terminal mobile et leur agencement, l'homme du métier pourra notamment se référer à l'ouvrage « Téléphones GSM et PC », Patrick Gueule, ETSF, 3e édition, 2006.

Lorsque le terminal 1 est mis sous tension, et ultérieurement de manière régulière, il balaye les canaux de fréquences qu'il est capable de recevoir, et dresse une liste des réseaux accessibles et, parmi ceux-ci, une sous-liste des réseaux autorisés, c'est-à-dire pour lesquels le terminal 1 possède un code d'accès. Lorsque plusieurs réseaux sont à la fois accessibles et autorisés, la liste de ces réseaux peut être affichée sur l'écran 5.

L'unité 4 de traitement comprend une mémoire intégrée dans laquelle peut être implémenté un répertoire interne comprenant une liste de contacts auxquels correspondent des identifiants ou URI (Uniform Resource Identifier) constitués de chaînes de caractères alphanumériques (par exemple un numéro de téléphone formé d'une succession de chiffres, du type 0123456789, ou encore une adresse de messagerie du type terminal@distant.com). Un répertoire externe peut également être chargé sur le terminal **1** à partir d'une carte d'authentification à puce (carte SIM) insérée de manière amovible dans le terminal **1.**

La connexion à un terminal distant est précédée d'une phase de signalisation dans laquelle le terminal **1** adresse au réseau une requête de mise en communication comprenant l'URI du terminal distant. Sous réserve de l'acceptation de la requête par le terminal distant, une session de communication est alors établie entre les deux terminaux.

La composition de l'URI dans le terminal 1 pour l'envoi de la requête de mise en communication peut être réalisée :
- soit par chargement de l'URI à partir d'une entrée mémorisée dans un répertoire ;
- soit par saisie directe de l'URI au clavier.

L'URI est encapsulée dans un champ d'identification au sein d'une chaîne de caractères correspondant de manière biunivoque à un contact, et comprenant par ailleurs au moins un champ de description accompagnant le champ d'identification.

En pratique, le contact peut comprendre trois champs de description en accompagnement du champ d'identification, contenant chacun un descripteur constitué d'un caractère ou d'une succession de caractères sélectionné(s) parmi une liste de descripteurs prédéterminés, correspondant chacun à une catégorie prédéterminée à laquelle appartient l'URI contenu dans le champ d'identification.

Le(s) descripteur(s) peu(ven)t être soit saisi(s) directement au clavier avant la saisie de l'URI ou son extraction du répertoire (utilisation dynamique du ou des descripteur(s)), soit mémorisé(s) dans un répertoire à titre de préfixe de l'URI, et extrait(s) du répertoire en même temps que l'URI (utilisation statique du ou des descripteur(s)) lors de la constitution de la requête de mise en communication.

À chaque valeur d'un descripteur donné correspond une règle de mise en communication propre, programmée dans l'unité **4** de traitement du terminal **1,** et à laquelle se conforme celui-ci lorsque ladite valeur est identifiée dans un contact saisi au clavier ou chargé depuis un répertoire.

D'un point de vue formel, le ou les champs de description précède(nt) de préférence le champ d'identification, dont il(s) forme(nt) un préfixe que le terminal **1** peut lire avant même de lire le contenu du champ d'identification.

Un premier descripteur correspond par exemple au caractère privé ou professionnel du contact vis-à-vis du titulaire du terminal **1.** Cet exemple illustre le cas où le terminal **1** est mis à disposition d'un salarié par son employeur et peut être utilisé pour contacter des destinataires appartenant soit à la sphère privée du salarié, soit à sa sphère professionnelle. Dans cet exemple, les catégories liées au premier descripteur sont donc « privé » et « professionnel » (ou « pro »). À chacune de ces catégories correspond une valeur prédéterminée du descripteur : par exemple * (étoile) pour un contact privé, et # (dièse) pour un contact professionnel.

Pour illustrer cet exemple, un contact téléphonique privé se présentera sous la forme suivante :
*0123456789
où :
- le champ d'identification contient l'URI 0123456789, numéro d'appel téléphonique du terminal distant correspondant au contact ;
- le premier champ de description, introduit comme préfixe dans le contact, contient le descripteur *, indiquant que l'URI (et donc le contact correspondant) appartient à la catégorie « privé ».

De manière similaire, un contact téléphonique professionnel se présentera sous la forme suivante :
#2345678901
où :
- le champ d'identification contient l'URI 2345678901, numéro d'appel téléphonique du terminal distant correspondant au contact ;
- le premier champ de description contient le descripteur #, indiquant que l'URI appartient à la catégorie « pro ».

À la valeur * du premier descripteur (contact privé, partie gauche de l'arborescence du synoptique de la figure 2), la règle de mise en communication est par exemple l'envoi de la requête de mise en communication par le terminal **1** directement via un réseau de radiocommunication cellulaire. En variante, comme illustré sur la figure 2, la règle peut comprendre la vérification préalable de la disponibilité d'un réseau WLAN (par exemple WiFi) décrété comme prioritaire, et :
- dans l'hypothèse où ce réseau WLAN est accessible, l'envoi de la requête par ce réseau en transitant par une passerelle (gateway) d'entreprise (bloc **100**), la requête pouvant ultérieurement être transmise via le réseau de radiocommunication cellulaire (cela n'apparaît pas sur le synoptique) ;
- dans l'hypothèse où ce réseau WLAN est inaccessible (ou non autorisé), le basculement vers le réseau de radiocommunication cellulaire à condition que celui-ci soit à son tour accessible, la numérotation se faisant de manière directe à partir de l'URI (bloc **110**). A défaut de disponibilité du réseau cellulaire, la connexion ne se fait pas (bloc **120**).

Pour la valeur # du premier descripteur (contact pro, partie droite de l'arborescence du synoptique de la figure 2), la règle de mise en communication comprend par exemple l'envoi de la requête de mise en communication par le terminal via un réseau WLAN (par exemple WiFi), sous réserve que celui-ci soit accessible. Dans l'hypothèse où le réseau WLAN est inaccessible, la règle peut ordonner le basculement vers un réseau de radiocommunication cellulaire à condition que celui-ci soit accessible (à défaut, la connexion au réseau ne se fait pas).

Un deuxième descripteur peut être prévu, correspondant par exemple à la localisation (au sein d'un site à partir duquel le terminal émet la requête, ou au contraire à l'extérieur de ce site) et/ou à l'appartenance ou non du contact à la société à laquelle est rattaché le terminal. Dans cet exemple, les catégories liées au deuxième descripteur sont donc « externe » (ou « ext ») et « interne » (ou « int »). À chacune de ces catégories correspond une valeur prédéterminée du descripteur : par exemple * (étoile) pour un contact externe, et # (dièse) pour un contact interne. Dans cet exemple, on comprendra que la présence même du deuxième descripteur est conditionnée par la valeur du premier descripteur. En l'occurrence, la présence du deuxième descripteur ne se justifie que dans l'hypothèse où la catégorie du premier descripteur est « pro » (valeur #).

Pour illustrer cet exemple, un contact téléphonique professionnel externe se présentera sous la forme suivante :
#*0123456789
où :
- le champ d'identification contient l'URI 0123456789, numéro d'appel téléphonique du terminal distant correspondant au contact ;
- le premier champ de description contient le descripteur #, indiquant que l'URI (et donc le contact correspondant) appartient à la catégorie « pro » ;
- le deuxième champ de description contient le descripteur *, indiquant que l'URI appartient à la catégorie « ext ».

De manière similaire, un contact téléphonique professionnel interne se présentera sous la forme suivante :
##2345678901
où :
- le champ d'identification contient l'URI 2345678901, numéro d'appel téléphonique du terminal distant correspondant au contact ;
- le premier champ de description ontient le descripteur #, indiquant que l'URI (et donc le contact correspondant) appartient à la catégorie « pro » ;
- le deuxième champ de description contient le descripteur #, indiquant que l'URI appartient à la catégorie « int ».

À la valeur du deuxième descripteur correspond une règle de mise en communication subordonnée aux modalités d'application de la règle de mise en communication correspondant au premier champ de description.

Ainsi, la règle de mise en communication correspondant à la valeur * du deuxième descripteur peut comprendre l'alternative suivante :
- Dans l'hypothèse où le réseau WLAN est inaccessible, et le réseau de radiocommunication cellulaire accessible, envoi de la requête via ce réseau avec, pour la composition du numéro, l'utilisation directe et complète de l'URI (bloc **200**) ; si le réseau cellulaire est inaccessible, la connexion ne se fait pas (bloc **210**) ;
- Dans l'hypothèse où le réseau WLAN est accessible, envoi de la requête de mise en communication via ce réseau en transitant par une passerelle (bloc **220**) avec, pour la composition du numéro, l'adjonction de préfixes en application de règles classiques de routage des appels, telle que l'adjonction du préfixe 0 pour un appel externe transitant par un multiplexeur téléphonique privé de type PABX (Private Automatic Branch eXchange), éventuellement complété par le préfixe 00 pour un appel destiné à l'international.

Lorsque le deuxième descripteur a la valeur # (contact professionnel interne), le terminal peut appliquer une règle supplémentaire liée à la valeur d'un troisième descripteur, correspondant par exemple à la numérotation, de type abrégé ou long, qui sera composée par le terminal à partir de l'URI contenu dans le champ d'identification. Dans cet exemple, les catégories liées au deuxième descripteur sont donc « abrégé » (ou « abr ») et « long ». À chacune de ces catégories correspond une valeur prédéterminée du descripteur : par exemple * (étoile) pour une numérotation abrégée, et # (dièse) pour une numérotation longue.

Pour illustrer cet exemple, un contact téléphonique professionnel interne à numérotation longue se présentera sous la forme suivante :
##*2345678901
où :
- le champ d'identification contient l'URI 2345678901, numéro d'appel téléphonique du terminal distant correspondant au contact ;
- le premier champ de description contient le descripteur #, indiquant que l'URI (et donc le contact correspondant) appartient à la catégorie « pro » ;
- le deuxième champ de description contient le descripteur #, indiquant que l'URI appartient à la catégorie « int » ;
- le troisième champ de description contient le descripteur *, indiquant que l'URI appartient à la catégorie « long ».

De manière similaire, un contact téléphonique professionnel interne à numérotation abrégée se présentera sous la forme suivante :
###78901
où :
- le champ d'identification contient l'URI 78901, numéro d'appel téléphonique du terminal distant correspondant au contact ;
- le premier champ de description contient le descripteur #, indiquant que l'URI (et donc le contact correspondant) appartient à la catégorie « pro » ;
- le deuxième champ de description contient le descripteur #, indiquant que l'URI appartient à la catégorie « int » ;
- le troisième champ de description contient le descripteur #, indiquant que l'URI appartient à la catégorie « abr ».

À la valeur du troisième descripteur correspond une règle de mise en communication prédéterminée.

Ainsi, la règle de mise en communication correspondant à la valeur * (URI long) du troisième descripteur comprend par exemple :
- dans l'hypothèse où le réseau WLAN est inaccessible, et le réseau de radiocommunication cellulaire accessible (voir ci-dessus les conditions dans lesquelles ces disponibilités sont vérifiées), l'envoi de la requête par le réseau cellulaire. La requête étant adressée à un contact interne, elle est transmise par le réseau cellulaire à la passerelle d'entreprise qui se charge de son acheminement vers le terminal destinataire (bloc **230**). Il est à noter que, le contact étant situé en interne, le réseau situé derrière la passerelle peut être configuré pour ne supporter qu'une numérotation abrégée. Dans la mesure où l'URI est de type « long », la passerelle peut par conséquent lui appliquer un filtre en ne retenant par exemple que les cinq derniers chiffres. Dans l'exemple ci-dessus, où l'URI complet est 2345678901, celui-ci se trouve par conséquent tronqué, par la passerelle, de ses cinq premiers chiffres, le numéro abrégé résultant étant composé des cinq derniers chiffres, à savoir 78901 ;
- dans l'hypothèse où le réseau WLAN est accessible, l'envoi de la requête de mise en communication via ce réseau en transitant par la passerelle d'entreprise (bloc **240**). Si le réseau ne supporte que la numérotation abrégée, le terminal **1** peut, pour composer le numéro abrégé, appliquer à l'URI un filtre en tronquant les caractères inutiles (par exemple les cinq premiers chiffres : 23456, pour ne retenir que les cinq derniers : 78901).

La règle de mise en communication correspondant à la valeur # (URI abrégé) du troisième descripteur comprend, pour le terminal **1 :**
- dans l'hypothèse où le réseau WLAN est inaccessible, et le réseau de radiocommunication cellulaire accessible (voir ci-dessus les conditions dans lesquelles ces disponibilités sont vérifiées), l'envoi de la requête par le réseau cellulaire. Dans la mesure où l'URI est de type abrégé, le terminal ne peut l'utiliser directement pour se connecter au réseau cellulaire, mais doit ajouter un préfixe correspondant à un numéro complet (bloc **250**). En l'occurrence, le terminal ajoute le préfixe 23456 à l'URI 78901 pour composer le numéro 2345678901. Cependant, le contact étant situé en interne, le réseau situé derrière la passerelle peut être configuré pour ne supporter qu'une numérotation abrégée. La passerelle peut par conséquent appliquer au numéro complet un filtre en ne retenant par exemple que les cinq derniers numéros (qui correspondent en fait à l'URI tel que pris en compte initialement par le terminal) ;
- dans l'hypothèse où le réseau WLAN est accessible, l'envoi de la requête de mise en communication via ce réseau en transitant par la passerelle d'entreprise (bloc **260**). Si le réseau supporte la numérotation abrégée, le terminal **1** effectue la numérotation directement à partir de l'URI, la communication transitant sans filtre par la passerelle d'entreprise.

Pour l'établissement d'une communication, le terminal **1** commence par prendre en compte le contact destinataire, lequel est soit saisi au clavier, soit extrait d'un répertoire.

Le contact est analysé par le terminal **1,** qui prend en compte, dans le(s) champ(s) de description, la valeur du (des) descripteur(s) et détermine la (les) règle(s) correspondante(s) de mise en communication.

Le terminal **1** prend également en compte l'URI dans le champ d'identification et envoie à destination du terminal distant une requête de mise en communication conformément à la (aux) règle(s) de mise en communication correspondant au descripteur ou à la combinaison de descripteurs. Des exemples de règles sont décrites ci-dessus. On pourrait en prévoir d'autres en fonction de la configuration des réseaux accessibles et des règles de fonctionnement (notamment de numérotation) de ces réseaux.

La mise en oeuvre de ce procédé est faite en application d'instructions d'un programme d'ordinateur implémenté sur l'unité **4** de traitement du terminal **1.** Ces instructions incluent notamment l'ensemble des règles de mise en communication, telles que décrites ci-dessus.

Grâce à ce procédé, il est possible d'utiliser un terminal en mode dual sans nécessité pour l'utilisateur de sélectionner le réseau par lequel doivent transiter les communications, le terminal effectuant lui-même le choix en fonction de la valeur des descripteurs associés aux URI des contacts. De même, l'utilisateur n'est pas contraint par les impératifs de numérotation (abrégée, longue).

Par ailleurs, il est envisageable, à partir d'un répertoire de contacts dépourvus de descripteurs (c'est-à-dire constitué des seuls URI), d'enrichir de manière automatique le répertoire en associant aux URI des descripteurs en application de règles prédéfinies. Par exemple, l'employeur peut établir une liste d'URI décrétés comme correspondant à des contacts internes, pour lesquels une règle prédéterminée de mise en communication doit s'appliquer. Aux URI correspondants dans le répertoire du terminal est donc attribué le descripteur #, aux autres URI étant attribué le descripteur *. L'insertion des autres descripteurs peut se faire de manière similaire, à partir de règles prédéterminées telles que décrites ci-dessus.

## Revendications

1. Procédé d'établissement d'une communication à destination d'un terminal distant à partir d'un terminal (**1**) mobile fonctionnant en mode dual, comprenant les opérations suivantes :
- Prise en compte par le terminal (**1**) d'un contact correspondant au terminal distant et comprenant chaîne de caractères comprenant un champ d'identification contenant un identifiant du terminal distant, et un champ de description contenant au moins un caractère correspondant à une catégorie prédéterminée à laquelle appartient l'identifiant contenu dans le champ d'identification ;
- Analyse par le terminal (**1**) de la chaîne de caractères ;
- Prise en compte par le terminal (**1**) de la valeur du champ de description ;
- Détermination d'une règle de mise en communication correspondant à ladite valeur, cette règle comprenant la sélection d'un réseau de communication parmi plusieurs réseaux distincts auxquels le terminal peut accéder ;
- Prise en compte de la valeur du champ d'identification ;
- Envoi, à destination du terminal distant, via le réseau sélectionné, d'une requête de mise en communication conformément à ladite règle ;
**caractérisé en ce que** pour une première valeur prédéterminée du champ d'identification, la règle de mise en communication comprend l'envoi de la requête via un réseau de radiocommunication cellulaire.

2. Procédé selon la revendication 1, dans lequel la règle de mise en communication comprend l'ordre au terminal (**1**) d'envoyer la requête via, successivement, un réseau local sans fil et un réseau de radiocommunication cellulaire.

3. Procédé selon la revendication 2, dans lequel la règle de mise en communication au terminal distant comprend, lorsque le réseau local sans fil est inaccessible ou d'accès non autorisé, le basculement sur le réseau cellulaire.

4. Procédé selon l'une des revendications 1 à 3, dans lequel ladite première valeur prédéterminée du champ de description correspond à un contact de type privé.

5. Procédé selon la revendication 1, dans lequel, pour une deuxième valeur prédéterminée du champ d'identification, la règle de mise en communication comprend l'envoi de la requête en priorité via un réseau local sans fil.

6. Procédé selon la revendication 5, dans lequel la règle de mise en communication comprend, lorsque le réseau local sans fil est inaccessible, l'envoi la requête via un réseau de radiocommunication cellulaire.

7. Procédé selon la revendication 5 ou 6, dans lequel ladite deuxième valeur prédéterminée du champ de description correspond à un contact de type professionnel.

8. Produit programme d'ordinateur implémenté sur une unité de traitement d'un système informatique, ledit programme comprenant des instructions pour la mise en oeuvre d'un procédé selon l'une des revendications 1 à 7.

9. Terminal (**1**) mobile fonctionnant en mode dual, comprenant une unité de traitement sur laquelle est implémenté un produit programme d'ordinateur selon la revendication 8.

## Patentansprüche

1. Verfahren zum Herstellen einer Kommunikation mit einem entfernten Endgerät, ausgehend von einem mobilen Endgerät (1), das im Dual-Modus betrieben wird, umfassend die folgenden Schritte:
- Berücksichtigen durch das Endgerät (1) eines dem entfernten Endgerät entsprechenden Kontaktes und umfassend eine Zeichenkette, umfassend ein Identifikationsfeld mit einer Kennung des entfernten Endgerätes, und ein Beschreibungsfeld mit mindestens einem Zeichen entsprechend einer vorgegebenen Kategorie, zu welcher die im Identifikationsfeld enthaltene Kennung gehört;
- Analysieren der Zeichenkette durch das Endgerät (1);
- Berücksichtigen des Wertes des Beschreibungsfeldes durch das Endgerät (1);
- Bestimmen einer Regel für das Verbinden entsprechend des besagten Wertes, wobei diese Regel die Auswahl eines Kommunikationsnetzes aus mehreren verschiedenen Netzen umfasst, auf welche das Endgerät zugreifen kann;
- Berücksichtigen des Wertes des Identifikationsfeldes;
- Versenden einer Verbindungsanfrage an das entfernte Endgerät über das ausgewählte Netz gemäß der besagten Regel;
**dadurch gekennzeichnet, dass** für einen ersten vorgegebenen Wert des Identifikationsfeldes die Regel zum Verbinden das Versenden der Anfrage über ein mobiles Funkkommunikationsnetzwerk umfasst.

2. Verfahren nach Anspruch 1, wobei die Regel zum Verbinden den Befehl an das Endgerät (1) zum Senden einer Anfrage nacheinander über ein lokales Drahtlosnetzwerk und ein mobiles Funkkommunikationsnetzwerk umfasst.

3. Verfahren nach Anspruch 2, wobei die Regel zum Verbinden mit dem entfernten Endgerät bei einem unzugänglichen oder nicht autorisierten lokalen Drahtlosnetzwerk das Wechseln in das Mobilnetzwerk umfasst.

4. Verfahren nach einem der Ansprüche 1 bis 3, wobei besagter erster vorgegebener Wert des Beschreibungsfeldes einem privaten Kontakt entspricht.

5. Verfahren nach Anspruch 1, wobei für einen zweiten vorgegebenen Wert des Identifikationsfeldes die Regel zum Verbinden das Versenden der Anfrage vorrangig über ein lokales Drahtlosnetzwerk umfasst.

6. Verfahren nach Anspruch 5, wobei die Regel zum Verbinden, wenn das lokale Drahtlosnetzwerk unzugänglich ist, das Versenden einer Anfrage über ein mobiles Funkkommunikationsnetzwerk umfasst.

7. Verfahren nach Anspruch 5 oder 6, wobei besagter zweiter vorgegebener Wert des Beschreibungsfeldes einem professionellem Kontakt entspricht.

8. Computerprogrammprodukt, implementiert auf einer Verarbeitungseinheit eines Informatiksystems, wobei besagtes Programm die Anweisungen zum Umsetzen eines Verfahrens nach einem der Ansprüche 1 bis 7 umfasst.

9. Mobiles Endgerät (1), das im Dual-Modus betrieben wird, umfassend eine Verarbeitungseinheit, auf welcher ein Computerprogrammprodukt nach Anspruch 8 implementiert ist.

## Claims

1. A method for establishing a communication intended for a remote terminal from a mobile terminal (1) operating in dual mode, comprising the following operations:
- Taking into account, by the terminal (1), a contact corresponding to the remote terminal and comprising a character string comprising an identification field containing an identifier of the remote terminal, and a description field containing at least one character corresponding to a predetermined category to which the identifier contained in the identification field belongs;
- Analysis by the terminal (1) of the character string;
- Taking into account by the terminal (1) the value of the description field;
- Determining a rule for commencing communication corresponding to said value, that rule comprising the selection of a communication network from among several distinct networks which the terminal may access;
- Taking into account the value of the identification field;
- Sending, to the remote terminal, via the selected network, a request to commence communication in accordance with said rule;
**characterized in that** for a first predetermined value of the identification field, the rule for commencing communication comprises the sending of the request via a cellular radio communication network.

2. A method according to claim 1, wherein the rule for commencing communication comprises the order to the terminal (1) to send the request, via, successively, a wireless local area network and a cellular radio communication network.

3. A method according to claim 2, wherein the rule for commencing communication to the remote terminal comprises, when the wireless local area network is inaccessible or access is unauthorized, handover to the cellular network.

4. A method according to one of the claims 1 to 3, wherein said first predetermined value of the description field corresponds to a private contact.

5. A method according to claim 1, wherein, for a second predetermined value of the description field, the rule for commencing communication comprises the sending of the request as a priority via a wireless local area network.

6. A method according to claim 5, wherein the rule for commencing communication corresponds, when the wireless local area network is inaccessible, sending the request via the cellular radio communication network.

7. A method according to claim 5 or 6, wherein said second predetermined value of the description field corresponds to a professional contact.

8. A computer program product implemented on a processing unit of an information system, said program comprising instructions for implementing a method according to one of the claims 1 to 7.

9. A mobile terminal (1) operating in dual mode, comprising a processing unit on which is implemented a computer program product according to claim 8.
